# EUROPEAN PATENT APPLICATION

(11) **EP 1 422 035 A1**
(43) Date of publication of application: **26.05.2004**
(21) Application number: 02758868.0
(22) Date of filing: 22.08.2002
(51) Int. Cl.: B29B 17/00, C08J 11/12, B02C 18/14, B02C 18/22, B07B 1/00, B07B 1/04, B07B 1/46, B26D 1/28

(54) **RESIN WASTE MELTING AND VOLUME REDUCING DEVICE, AND VOLUME REDUCING METHOD USING THE DEVICE**

(30) Priority: 27.08.2001 JP 2001255751
(71) Applicant: Iinuma Gauge Mfg. Co., Ltd., Chino-shi, Nagano 391-8550 (JP)
(72) Inventor: MIKOSHIBA, Mamoru, Suwa-gun, Nagano 393-0000 (JP); KOJIMA, Kazuaki, Okaya-shi, Nagano 394-0034 (JP); KIKUCHI, Kazuie, Utsunomiya-shi, Tochigi 321-3233 (JP)
(74) Representative: Bates, Philip Ian
(86) International application number: PCT/JP2002/008480
(87) International publication number: WO 2003/018279

(57) **Abstract**

A melting volume reduction device (10) for waste resin comprises: a charging port (15) for charging waste resin; a cutter (38) for crushing the charged waste resin; a screen (39) through which pieces of waste resin, which have been crushed into sizes not more than a predetermined size, can pass; a conveyer means (49) for conveying the pieces of waste resin which have passed through the screen; a melting means (44) for melting the pieces of waste resin, which have been conveyed by the conveyer means, into a state of high viscosity; and a discharge port (44a) for discharging the melted waste of resin. The melting volume reduction device for waste resin is composed so that it can be transported by a transportation means, and the melting volume reduction device for waste resin is capable of reducing a volume of waste resin by means of melting at a site where the waste resin is generated.

## Description

### BACKGROUND OF THE INVENTION

### Field of the Invention

The present invention relates to a melting volume reduction device for waste resin and a melting volume reduction method using the device.

### Description of the Related Art

As resin and, especially, foamed resin such as foamed styrene is light and further it can be molded easily, a large quantity of foamed resin is used for the wall members of houses, insulating materials for houses, cold containers referred to as fish containers, containers for packing foodstuffs and cushion materials for packing. However, as is well known, waste foamed resin has some difficulties in the case of disposing of it. To be specific, the following problems may be encountered. Foamed resin cannot be decomposed naturally. Further, when foamed resin is crushed into pieces, it scatters widely. Furthermore, when foamed resin is burnt in an imperfect incinerator, columns of black smoke shoot up into the sky.

In order to solve the above problems, it is conventional that waste foamed resin is transported to a waste disposal plant and incinerated at high temperatures so as to thermally decompose the waste foamed resin. However, in the process of transportation, it is impossible to reduce a volume of waste of resin by means of compression. That is, waste of foamed resin is bulky, which increases the expenses of transportation. The reduction of waste resin will be referred to as volume reduction hereinafter.

In some cases, foamed resin is used in such a manner that it is crushed into small pieces and mixed with cement so that it can be used for manufacturing light-weight concrete. However, in this case, it is necessary to wash the waste of foamed resin so as to clean it, that is, washing expenses are required in addition to the transportation expenses. Therefore, the cost of using waste foamed resin is higher than that of using new foamed resin. For the above reasons, the waste foamed resin for manufacturing light-weight concrete is not widely used.

It is an object of the present invention to provide a melting volume reduction device for waste resin and a melting volume reduction method using the device by which waste resin can be reused at low cost.

### DISCLOSURE OF THE INVENTION

In order to solve the above problems, the present invention provides a melting volume reduction device for waste of resin which comprises, a charging port for charging waste of resin, a cutter for crushing the charged waste of resin, a screen through which pieces of waste of resin, which have been crushed into sizes not more than a predetermined size, can pass, a conveyance means for conveying the pieces of waste of foamed styrene which have passed through the screen, a melting means for melting the pieces of waste of resin, which have been conveyed by the conveyance means, into a state of high viscosity, and a discharge port for discharging the melted waste of resin, wherein
the melting volume reduction device for waste of resin is composed so that it can be transported by a transportation means, and the melting volume reduction device for waste of resin is capable of reducing a volume of waste of resin, by means of melting, at a site where the waste of resin is generated.

It is preferable that the melting volume reduction device is composed so that it can be transported by a truck.

According to one embodiment of the present invention, the charging port is provided in an upper portion of a casing arranged on a base, the cutter is provided in a lower portion of the charging port, the screen is provided in a lower portion of the cutter, the conveyer means for conveying the waste of resin, which has dropped from the screen, in the traverse direction is provided in a lower portion of the screen, the melting means is attached to the outside of a lateral wall of the casing, and the waste of resin conveyed by the conveyer means is melted by the melting means.

It is preferable that casters are attached to the base.

It is preferable that the cutter is a combined-type cutter including comb-tooth-shaped stationary blades and rotary blades attached to a rotary shaft and interposed between the stationary blades, and that the rotary blades periodically rotate in the normal and the reverse direction.

It is preferable that the screen is a combined-type screen in which a stationary screen and a movable screen are combined with each other, and the size of the passing portion of the screen can be adjusted when the movable screen is moved.

The waste of resin is waste of foamed styrene, and the melting means heats the waste of resin to temperatures from 200 to 240°C.

It is preferable that the melting means is formed into a cylinder, the one end side of which is closed, the melting means includes a heater block attached to the outside of a lateral wall of the casing, the conveyer means is a screw conveyer in which spiral blades are attached to a rotary shaft, one end side of the screw conveyer enters the heater block, and a portion of the screw conveyer located in the heater block and a portion of the screw conveyer located outside the heater block are connected to each other by a heat insulating member.

It is preferable that the discharge port is arranged in a lower portion of the inner wall of the heater block.

It is preferable that a recessed portion communicating with the discharge port is arranged on an inner face of the inner wall of the heater block.

It is preferable that a foreign object ejection port, which is closed at the time of normal operation, is provided in a lower portion of the inner wall of the heater block.

The present invention provides a melting volume reduction method for reducing a volume of waste resin by means of melting with one of the melting volume reduction devices for waste resin described above.

### BRIEF DESCRIPTION OF THE DRAWINGS

Fig. 1 is a front view showing an embodiment of the melting volume reduction device for waste resin of the present invention.
Fig. 2 is a perspective view of the cutter.
Fig. 3 is a view showing a profile of the blade element of the rotary blade.
Fig. 4 is a schematic illustration for explaining the screen.
Fig. 5 is an enlarged view showing the heater block.
Fig. 6 is a view showing an example of the structure of the connecting portion of the screw conveyer.

### THE MOST PREFERRED EMBODIMENT OF THE PRESENT INVENTION

Referring to the drawings, an embodiment of the melting volume reduction device for waste of resin of the present invention will be explained in detail as follows.

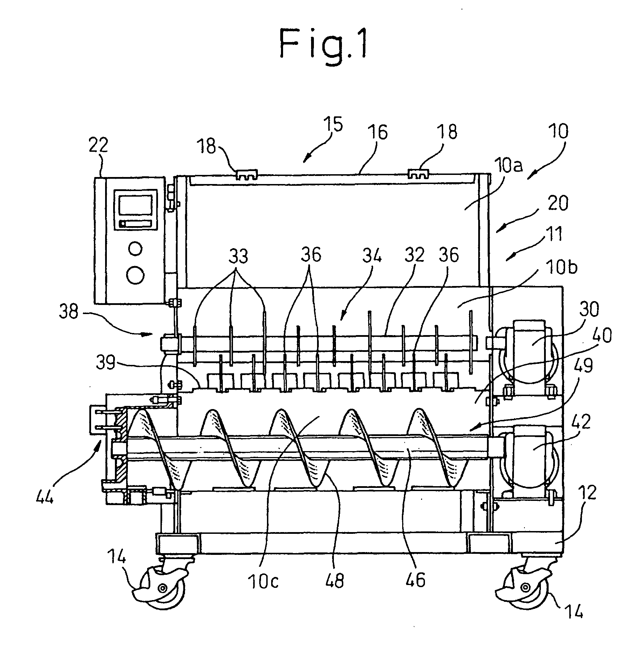

Fig. 1 is a front view showing an outline of the embodiment of the melting volume reduction device 10 for reducing a volume of waste foamed styrene, the quantity of generation of which is the largest, by means of melting.

Reference numeral 11 is a casing, which is composed of metallic plates attached onto the base 12, and a profile of the casing 1 is formed into a box-shape. Casters 14 are attached to the base 12, so that the melting volume reduction device 10 can be moved on the casters 14. The inside of this melting volume reduction device 10 is composed of an upper layer portion 10a, a middle layer portion 10b and a lower layer portion 10c.

First, the upper layer portion 10a will be explained below. The upper layer portion 10a is formed into a hollow box shape. The charge port 15 for charging waste of foamed styrene is arranged on an upper face of the upper layer portion 10a. The charge port 15 can be freely opened and closed by the lid 16. A lower portion of the charge port 15 is formed into a hopper. The control board 22 for inverter-controlling a cutter 38, a screw conveyer 49 and a heater block 44, which will be described layer, is attached onto the side of the upper layer portion 10a.

In this connection, it is preferable that the control board 22 is provided with an abnormal current sensing means for preventing motors 30, 42, which will be described later, from being damaged by an overload given to them and an emergency stopping function is preferably added to the control board 22.

Next, the middle layer portion 10b will be explained below. Outside of one side portion of the middle layer portion 10b, the motor 30 is arranged which is inverter-controlled by the control board 22. An upper portion of the middle layer portion 10b is communicated with the hopper portion 20. At the central portion of the middle layer portion 10b, the rotary shaft 32 is arranged, one end of which is connected to the output shaft 30a of the motor 30 and the other end of which is pivotally supported by the casing 11. The rotary blades 34 having the blades 33 are attached to the rotary shaft 32. Below the rotary blades 34, the comb-tooth-shaped stationary blades 36, between which the blades 33 of the rotary blades 34 can enter, are arranged. The rotary blades 34 and the stationary blades 36 compose a cutter 38. In the neighborhood of the stationary portion, in which the stationary blades 36 are arranged, the screen 39, the passing size of which can be adjusted, is arranged.

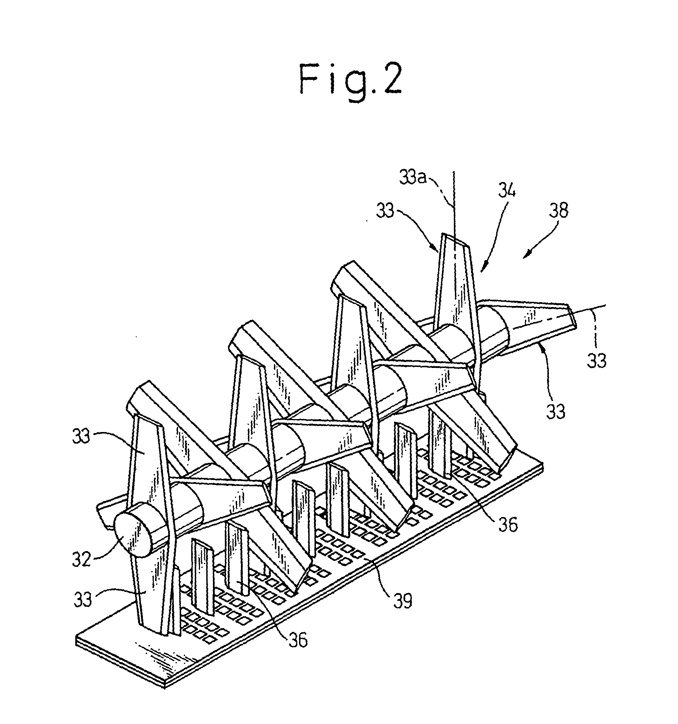

Fig. 2 is a perspective view for explaining the cutter 38. As shown in the drawing, the blade elements 33 of the rotary blades 34 composing the cutter 38 are fixed to the rotary shaft 32. Two of the blade elements 33 compose one set, and these blade elements 33 are arranged round the rotary shaft 32 at the interval of 180°. These blade elements 33, two of which compose one set, are arranged on the rotary shaft 32 in the longitudinal direction at regular intervals. The axial lines 33a in the longitudinal direction of the blade elements 33, which are adjacent to each other, are arranged so that the axial lines 33a can form an angle of 60° round the rotary shaft 32.

The rotating speed and rotating direction of the motor 30 are inverter-controlled by the control board 22. In this embodiment, it is set that a normal rotation and reverse rotation of the motor 30 are repeatedly conducted at regular intervals. Due to this normal rotation and reverse rotation of the motor 30, the rotary blades 34 are repeatedly rotated in the normal and the reverse direction. Due to the foregoing, a state in which the cutter 38 comes into contact with the charged foamed styrene is changed. Accordingly, compared with a case in which the cutter 38 is rotated only in one direction, the charged foamed styrene can be effectively crushed, and the crushing process time can be reduced.

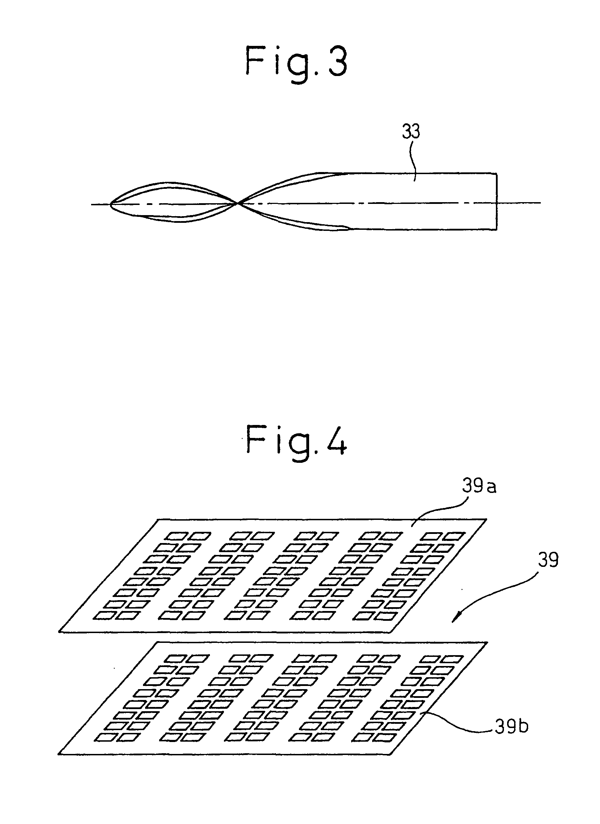

When each blade element 33 is formed in such a manner that it is twisted round the axial line 33a in the longitudinal direction of the blade element 33 ash shown in Fig. 3, the waste foamed styrene is stirred by the rotation of the rotary blades 34, and a state in which the cutter 38 comes into contact with the charged foamed styrene is further changed. Therefore, the crushing process can be more effectively conducted and the processing efficiency can be improved.

Fig. 4 is a schematic illustration for explaining the screen. The screen 39 is composed in such a manner that the screen plates 39a, 39b, on which the passing holes of the same size are arranged at the same intervals, are combined with each other. One screen plate 39a is fixed to the melting volume reduction device 10, and the other screen plate 39b is arranged so that it can be slid with respect to the screen plate 39a. When the screen plate 39b is manually slid, a size of the portion, in which each passing hole of the screen plate 39a and each passing hole of the screen plate 39b overlap to each other, is changed, so that the passing size of the screen 39 can be appropriately adjusted. In this connection, the method of sliding the screen plate 39b is not limited to the above manually sliding method but the method of using an automatic adjusting mechanism, in which one screen plate is slid by a drive unit, may be adopted.

Next, the lower layer portion 10c is explained below.

In the lower layer portion 10c, the guide plate 40, at least the lower portion of which is formed into a substantially cylindrical shape, is arranged in the traverse direction. An upper portion of the guide plate 40 is communicated with the screen 39.

Outside of one side portion of the guide plate 40, the motor 42 is attached which is inverter-controlled by the control board 22. An output shaft of the motor 42 is connected to the rotary shaft 46, and the spiral blades 48 are attached to the rotary shaft 46. Therefore, the rotary shaft 46 and the spiral blades 48 compose the screw conveyer 49. Outside of the other side portion of the guide plate 40, the heater block 44 is attached.

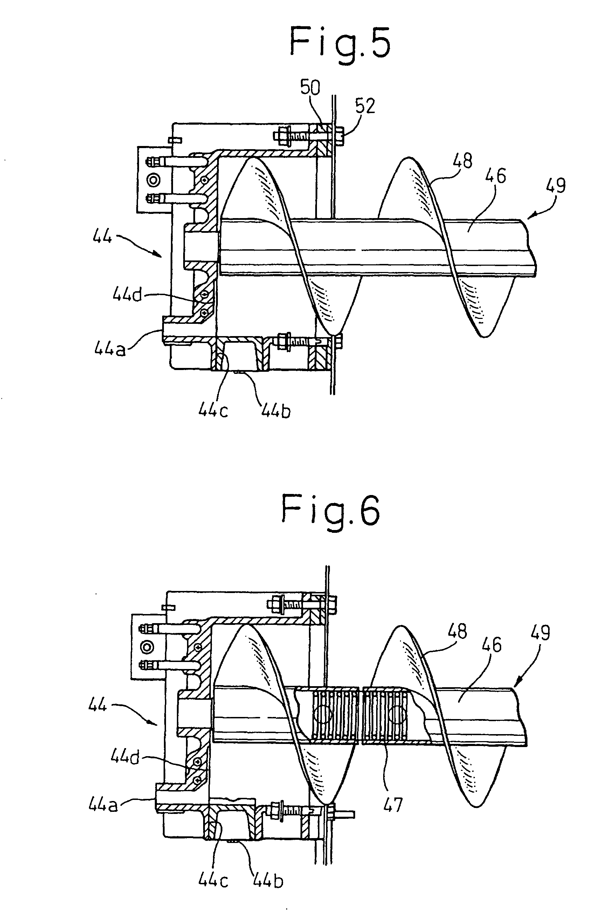

Fig. 5 is a partially enlarged view of this heater block 44. An end portion, which is open, of the heater block 44 is detachably attached to the side wall of the casing 11 by the attaching bolts 51 via the heat insulating material member 50. An electric wire 52 for supplying electric power is connected to the heater block 44. An end portion of the rotary shaft 46 of the screw conveyer 49 on the side opposite to the motor side enters the heater block 44.

In a lower portion of the inner wall of the heater block 44, the discharge port 44a, the profile of which is rectangular, is provided, and molten resin is extruded out from the discharge port 44a being formed into a plate-shape. On an inner wall face of the heater block 44, the recessed portion 44d communicating with the discharge port 44a is provided. This recessed portion 44d is formed in such a manner that a lower half of the inner wall face of the heater block 44 is somewhat hollow as compared with an upper half of the inner wall face of the heater block 44.

In the neighborhood of the discharge port 44a provided in the lower portion on the inner face of the heater block 44, the foreign object ejection port 44b, which is closed by the cap 44c at the time of normal operation but capable of being opened at any time, is provided. In this connection, another foreign object ejection port, which can be opened and closed, may be provided in a lower portion of the guide member 40.

Fig. 6 is a view showing a structure in which a portion of the screw conveyer 49 arranged in the heater block 44 and a portion of the screw conveyer 49 arranged outside the heater block 44 are formed by being divided into separate pieces from each other and are connected to each other by the coil spring 47.

When the rotary shaft is divided into separate pieces as described above and connected by the spring 47, no heat is transmitted from the heater block 44 to the portion of the screw conveyer 49 located outside the heater block 44.

Further, a heat insulating material member may be interposed between the spring 47 and the inner face of the rotary shaft 46.

In this embodiment, the melting volume reduction device 10 for waste resin is composed according to the following sizes. The width is 1100 mm, the depth is 765 mm and the height is 1400 mm. The weight of the melting volume reduction device 10 is approximately 150 kg. Therefore, the melting volume reduction device 10 can be transported by a small truck.

Accordingly, the melting volume reduction work can be performed by this device 10 at a site where waste foamed styrene has been generated.

The operation procedure of the melting volume reduction device for waste of resin composed as described above will be explained below.

A switch, of the device 10 and not shown, is turned on and waste foamed styrene is charged into the charge port 16. The thus charged waste of foamed styrene is temporarily stored in the hopper 20 and successively drops into the cutter 38.

The waste of foamed styrene, which has dropped into the cutter 38, is crushed into pieces of a predetermined size by the cutter 38. Pieces of the waste of foamed styrene crushed by the cutter 38, the sizes of which are smaller than the size of the screen 39, drop onto the guide plate 40.

The waste of foamed styrene, which has dropped onto the guide plate 40, is conveyed to the heater block 44 by the screw conveyer 49 and melted by the heater block 44 after being pressed to the heater block 44 by the rotation of the screw conveyer 49. As the waste foamed styrene is melted by the heater block 44 being pressed to the heater block 44 by the rotation of the screw conveyer 49, the waste of foamed styrene is melted by the heat transmitted from the entire wall face of the heater block 44. Therefore, the thermal efficiency is high.

Even resin material of low heat conductivity such as foamed styrene can be melted in a short period of time without raising the temperature of the heater block 44. Therefore, it is possible to melt the waste of foamed styrene with low intensity energy.

As described before, the portion 49a of the screw conveyer 49, which enters the heater block 44, is heated by the heater block 44 and functions as a part of the melting device together with the heater block 44. Therefore, the melting efficiency can be advantageously enhanced.

On the other hand, the portion 49b of the screw conveyer 49, which does not enter the heat block 44, is thermally insulated. Therefore, while the waste of foamed styrene is being conveyed on the guide plate 40 to the left in the drawing, there is no possibility that the waste of foamed styrene is melted by the heat of the screw conveyer 49, that is, the conveyance efficiency is not lowered.

The heater block 44 heats the waste foamed styrene to a temperature of 220 to 260°C, and the waste of foamed styrene is melted into a state of high viscosity. While the thus melted waste of foamed styrene is being conveyed by the pressure of the screw conveyer 49, the waste foamed styrene is scraped off by the recessed portion 44d, which is arranged on the wall face of the heater block 44, and discharged outside the device 10 from the discharge port 44a by the molten waste of foamed styrene which is successively conveyed by the screw conveyer 49 under pressure.

As described before, the recessed portion 44d is formed in such a manner that the lower half of the inner wall face of the heater block 44 is somewhat hollow as compared with the upper half. Therefore, when the waste foamed styrene, which has been melted, is pressed against the heater block 44 while being rotated by the screw conveyer 49, it is scraped off by a step portion formed by the recessed portion 44d and its upper portion.

The waste of foamed styrene, which has been discharged from the device, is naturally cooled or forcibly cooled by a cooling fan or water so that it can be solidified. Then, the solidified waste foamed styrene is transported as it is. Alternatively, the solidified waste of foamed styrene is crushed again so that it can be reused.

Usually, foreign objects, the sizes of which are smaller than a predetermined value, are discharged from the discharge port 44a outside the device 10 together with the molten waste of foamed styrene.

The foreign object ejection port 44b is provided so that foreign objects, the sizes of which are larger than the size of the discharge port 44a, can be discharged from the foreign object ejection port 44b. In the process of normal operation, the cap 44c is attached to the foreign object ejection port 44b. Therefore, no waste of foamed styrene, which has been melted, is discharged from the foreign object ejection port 44b. In this connection, in the case where the discharge port 44a is clogged by foreign objects, the cap 44c is detached from the foreign object ejection port 44b, so that the molten waste of foamed styrene can be discharged from the foreign object ejection port 44b together with the foreign objects. Alternatively, it is possible to use a rake (not shown in the drawing) to rake out the clogged foreign objects from the foreign object ejection port 44b.

This structure is advantageous as described below. Even when the discharge port 44a is clogged by foreign objects adhering to the waste of foamed styrene, the foreign objects can be easily discharged from the device 10 by detaching the cap 44c from the foreign object ejection port 44b. Therefore, operation can be resumed without stopping the device 10 over a long period of time.

When pieces of the foamed resin, which have been obtained by conducting the melting volume reduction process with the melting volume reduction device for waste of resin of the present invention, are crushed again, regenerated material can be obtained. When this regenerated material is mixed with construction material, it is possible to enhance the mechanical strength and anti-abrasion property of the construction material. Further, it is possible to reduce the weight of the construction material.

For example, the regenerated material is formed into grain-shaped pieces, flake-shaped pieces or fiber-shaped pieces, and the thus obtained regenerated material pieces are mixed with cement mortar at about 1 wt% to form wall members. When the regenerated material is added to cement mortar in this way, it is possible to prevent the occurrence of cracks on the wall members in the process of drying the cement mortar.

In the case of walls for houses which are formed like natural stones by mixing the regenerated material to concrete at several wt%, cracks seldom occur in the process of drying. Further, the effect of reducing the weight can be provided.

When the regenerated material is mixed with asphalt by several wt%, the thermal deformation temperature can be raised and the strength against abrasion can be enhanced. Accordingly, it is possible to prevent the generation of wheel tracks which are caused, in the summer, because asphalt is softened at high temperatures. Further, it is possible to prevent the generation of wheel tracks which are generated in winter because of abrasion caused by wheel chains.

In the case of the asphalt used for pavement having a high water discharging property, it is possible to enhance the percentage of voids.

As described above, the regenerated material can be easily used as a portion of a construction material. Even when the regenerated material is mixed with the construction material, no public nuisances are caused, and an increase in the material expenses can be suppressed.

Explanations are made above into the embodiment of the melting volume reduction device for waste of resin of the present invention in detail. However, it should be noted that the present invention is not limited to the above specific embodiment.

For example, the blade elements 33 of the rotary blade 34 are not necessarily twisted. Further, when the blade elements 33 and the stationary blades 36 are formed into saw-tooth-shaped blades, it is possible to provide a sufficiently high crushing effect. Further, when pawls are arranged at the end portions of the blade elements 33, it is possible to provide a sufficiently high crushing effect.

The waste resin, the volume of which is reduced by means of melting, may be the waste of plastics represented by foamed styrene PET bottles. In this case, the following countermeasures may be taken. Various types of blades composing the cutter 38 are composed so that they can be replaced, and the setting of the control portion 22 is changed so that the temperature of the heater block 44 can be changed.

Further, on the bottom face of the guide member 40 of the screw conveyer 49, holes, the sizes of which are substantially the same as the sizes of the passing holes provided on the screen plates 39a, 39b, may be appropriately provided, and a drawer type receiving plate (not shown) communicating with the holes on the bottom face may be arranged under the lower layer portion 10c. Due to the above structure, foreign objects separated from the waste of foamed styrene in the crushing process can be removed before the start of melting the waste of foamed styrene. Therefore, the possibility that the discharge port 44a is clogged by the foreign objects can be preferably decreased.

A melting volume reduction device for waste of resin of the present invention comprises: a charging port for charging waste of resin; a cutter for crushing the charged waste of resin; a screen through which pieces of waste of resin, which have been crushed into sizes not more than a predetermined size, can pass; a conveyance means for conveying the pieces of waste of resin which have passed through the screen; a melting means for melting the pieces of waste of resin, which have been conveyed by the conveyance means, into a state of high viscosity; and a discharge port for discharging the melted waste of resin, wherein the melting volume reduction device for waste of resin is composed so that it can be transported by a transportation means, and the melting volume reduction device for waste of resin is capable of reducing a volume of waste of resin by means of melting at a site where the waste of resin is generated. Accordingly, the transportation cost can be decreased.

## Claims

1. A melting volume reduction device for waste resin comprising: a charging port for charging waste resin; a cutter for crushing the charged waste resin; a screen through which pieces of waste resin, which have been crushed into sizes not more than a predetermined size, can pass; a conveyer means for conveying the pieces of waste resin which have passed through the screen; a melting means for melting the pieces of waste resin, which have been conveyed by the conveyance means, into a state of high viscosity; and a discharge port for discharging the melted waste resin, wherein
the melting volume reduction device for waste resin is composed so that it can be transported by a transportation means, and the melting volume reduction device for waste resin is capable of reducing a volume of waste of resin by means of melting at a site where the waste of resin is generated.

2. A melting volume reduction device for waste resin according to claim 1, wherein the melting volume reduction device is composed so that it can be transported by a truck.

3. A melting volume reduction device for waste resin according to claim 1, wherein the charging port is provided in an upper portion of a casing arranged on a base, the cutter is provided in a lower portion of the charging port, the screen is provided in a lower portion of the cutter, the conveyer means for conveying the waste of resin, which has dropped from the screen, in the traverse direction is provided in a lower portion of the screen, the melting means is attached to the outside of a lateral wall of the casing, and the waste resin conveyed by the conveyer means is melted by the melting means.

4. A melting volume reduction device for waste resin according to claim 1, wherein casters are attached to the base.

5. A melting volume reduction device for waste resin according to claim 1, wherein the cutter is a combined-type cutter including comb-tooth-shaped stationary blades and rotary blades attached to a rotary shaft and interposed between the stationary blades, and the rotary blades periodically rotate in the normal and the reverse direction.

6. A melting volume reduction device for waste of resin according to claim 1, wherein the screen is a combined-type screen in which a stationary screen and a movable screen are combined with each other, and a size of the passing portion of the screen can be adjusted when the movable screen is moved.

7. A melting volume reduction device for waste resin according to claim 1, wherein the waste resin is waste foamed styrene, and the melting means heats the waste of resin to a temperature from 200 to 240°C.

8. A melting volume reduction device for waste resin according to claim 1, wherein the melting means is formed into a cylinder, the one end side of which is closed, the melting means includes a heater block attached to the outside of a lateral wall of the casing, the conveyer means is a screw conveyer in which spiral blades are attached to a rotary shaft, one end side of the screw conveyer enters the heater block, and a portion of the screw conveyer located in the heater block and a portion of the screw conveyer located outside the heater block are connected to each other by a heat insulating member.

9. A melting volume reduction device for waste resin according to claim 8, wherein the discharge port is arranged in a lower portion of the inner wall of the heater block.

10. A melting volume reduction device for waste resin according to claim 8, wherein a recessed portion communicating with the discharge port is arranged on an inner face of the inner wall of the heater block.

11. A melting volume reduction device for waste resin according to claim 8, wherein a foreign object ejection port, which is closed at the time of normal operation, is provided in a lower portion of the inner wall of the heater block.

12. A melting volume reduction method for reducing a volume of waste resin, by means of melting, with one of the melting volume reduction devices for waste of resin described in claims 1 to 11.
